# EUROPEAN PATENT SPECIFICATION

(11) **EP 2 710 887 B1**
(45) Date of publication and mention of the grant of the patent: **14.11.2018**
(21) Application number: 13184104.1
(22) Date of filing: 12.09.2013
(51) Int. Cl.: A01G 9/24, E04D 13/03

(54) **Greenhouse**
Gewächshaus
Serre

(30) Priority: 19.09.2012 NL 2009488
(43) Date of publication of application: 26.03.2014
(73) Proprietor: Boal Systemen B.V., 2691 HC 's Gravenzande (NL)
(72) Inventor: Van Holsteijn, Gerardus Jacobus Maria, 2294 CM Wateringen (NL)
(74) Representative: De Vries & Metman

(56) References cited:
- EP-A1- 2 317 026
- DE-A1- 3 345 185
- DE-A1- 4 339 223
- NL-A- 9 101 958
- US-A- 5 735 086

## Description

The present invention relates to a roof structure for a greenhouse, comprising a fixed roof including a roof opening and a ventilation window which is movable with respect to the fixed roof between a closed position in which the ventilation window closes off the roof opening, and a vent position in which a window opening is present such that an air channel is formed between the roof opening and the ambient.

Such a roof structure is known in the prior art. The required venting capacity may depend on the type of the vegetation that is cultivated in a greenhouse. Generally, regarding energy efficiency and CO₂ reduction a limited ventilation is desired, which can be adjusted to the type of vegetation accurately.

NL 9 101 958 is related to a greenhouse including a ventilation window, which can be opened for ventilating the greenhouse. The greenhouse can be provided with screens which allow air to pass-through in an open condition of the ventilation window. DE4339223 relates to a ventilation window using a vent limiter to allow air flow when the ventilation window is slightly opened.

It is an object of the invention to provide a roof structure which allows to set an optimal and accurate ventilation.

This is achieved by the roof structure according to the invention, which is provided with a vent limiter having a ventilation opening which is smaller than the window opening, wherein the air channel extends through the ventilation opening.

Due to the vent limiter the effective flow-through area of the air channel is smaller than the flow-through area of the window opening. This means that for creating a limited ventilation the ventilation window may be displaced relatively far with respect to the fixed roof. Without the presence of the vent limiter the effective flow-through area of the window opening may already be large in case of a small displacement of the ventilation window from the closed position. Due to the presence of the vent limiter the effective flow-through area of the air channel can be adjusted accurately. In practice it may be possible to provide identical greenhouses with different ventilation openings because of cultivating different types of vegetation.

The vent position of the ventilation window may be an intermediate position between the closed position and an open position. In the open position the effective flow-through area of the air channel is larger than the ventilation opening. Such a position is necessary, for example, for creating natural ventilation, for example when space below the roof structure must be cooled.

In a practical embodiment the ventilation opening is at least 10% smaller than the window opening in the vent position, preferably 20% smaller and more preferably 40% smaller.

Furthermore, preferably the ventilation opening is adjustable within a range of 0-100% of the window opening, for example between 10 and 90% of the window opening. This means that different vent positions are possible which may be adjustable continuously.

Preferably, the vent limiter is adapted such that upon transferring the ventilation window from the closed position to the vent position the vent limiter is exposed. As a consequence, the vent position is attained automatically when the ventilation window is displaced with respect to the fixed roof from the closed position. If the ventilation opening is adjustable the vent limiter can be more or less exposed in this case. Different vent positions are possible by displacing the ventilation window to different positions with respect to the fixed roof.

In a specific embodiment the ventilation window is rotatably mounted to the fixed roof and rotatable about a hinge axis. In this case the vent limiter is disposed at least at the opposite side of the hinge axis. In practice, in the vent position the window opening at the sides of the ventilation window extending transversely with respect to the hinge axis is closed. Nevertheless, it is possible that there are also openings which additionally form the ventilation opening.

The roof structure may extend obliquely and may comprise a ridge, wherein preferably the ventilation window extends substantially between the ridge and the hinge axis. In this case there is ridge ventilation.

According to the invention, the vent limiter is mounted to the ventilation window, wherein the vent limiter is slidable along an edge of the roof opening, possibly provided with a sealing member in order to avoid leakage between the fixed roof and the vent limiter.

In an alternative embodiment according to the invention, the vent limiter is mounted to the fixed roof. In that case the ventilation window is slidable along the vent limiter.

The invention is also related to a greenhouse including a roof structure as described hereinbefore.

The invention will hereafter be elucidated with reference to drawings showing embodiments of the invention very schematically.
Fig. 1 is a sectional view of an embodiment of a roof structure for a greenhouse according to the invention, wherein a ventilation window of the roof structure is shown in a closed position.
Fig. 2 is a similar view as Fig. 1, but wherein the ventilation window is shown in an open position.
Fig. 3 is an enlarged partial view of Fig. 1 which is indicated therein with III.
Fig. 4 is a similar view as Fig. 3, but shows an alternative embodiment of the roof structure in a vent position.
Fig. 5 is a similar view as Fig. 3, but shows an alternative embodiment of the roof structure according to the invention.
Fig. 6 is a similar view as Fig. 5, but shows the ventilation window in a vent position.
Fig. 7 is a similar view as Fig. 5, but shows the ventilation window in an open position.
Fig. 8 is a sectional view of another alternative embodiment of a roof structure for a greenhouse according to the invention, wherein the ventilation window of the roof structure is shown in a closed position.
Fig. 9 is a sectional view along the line IX-IX in Fig. 8.

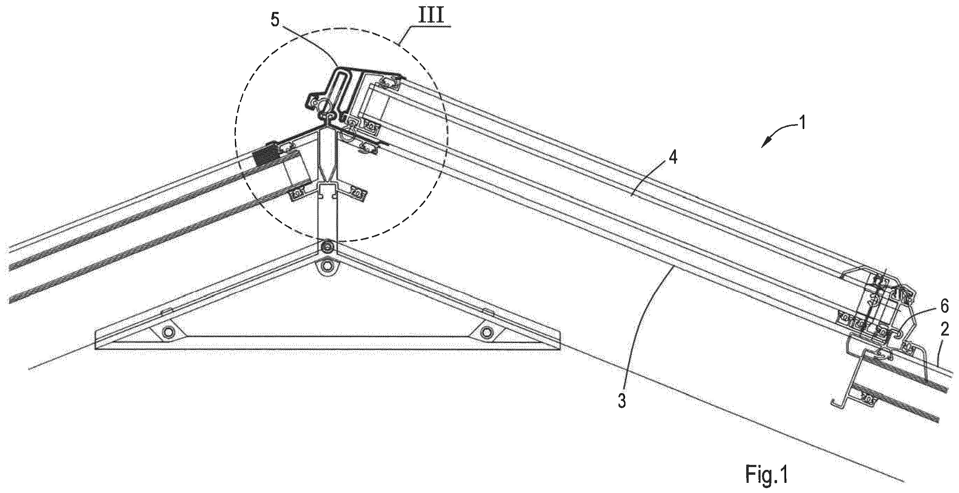

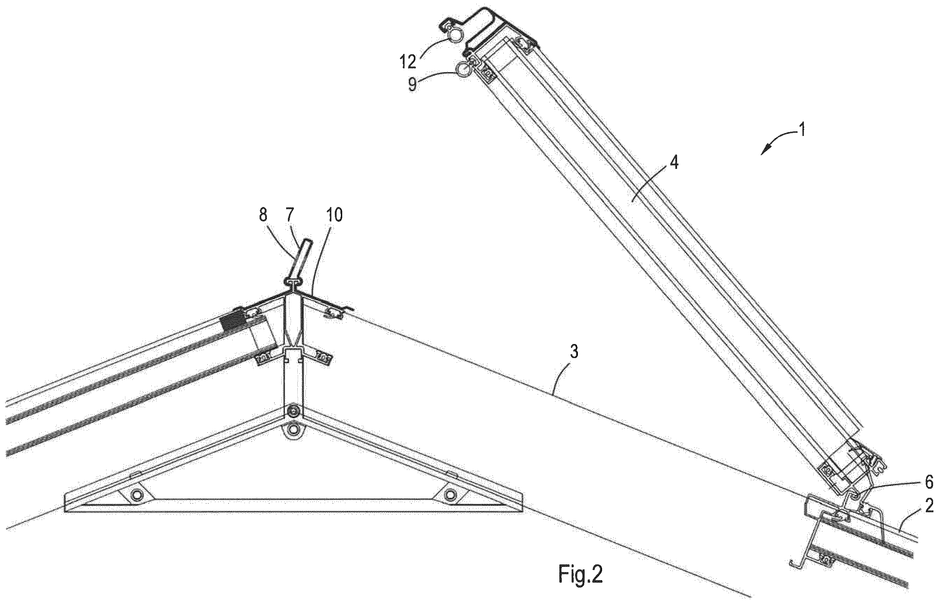

Figs. 1 and 2 show a part of an embodiment of a roof structure 1 for a greenhouse. It is noted that the roof structure 1 is also suitable for other buildings.

The roof structure 1 comprises a fixed roof 2 including a roof opening 3 and a ventilation window 4. The roof structure 1 extends obliquely and has a ridge 5. The ventilation window 4 is moveable with respect to the fixed roof 2. In this embodiment the ventilation window 4 is rotatable about a hinge axis 6, which extends substantially parallel to the ridge 5. Fig. 1 shows the ventilation window 4 in a closed position and Fig. 2 shows the ventilation window 4 in an open position. Although in the embodiment as shown the ventilation window 4 extends substantially between the ridge 5 and the hinge axis 6 in the closed position, an alternative embodiment in which this is reversed, is conceivable. In other words, as seen from the ridge 5 the ventilation window 4 may extend substantially beyond the hinge axis 6 in the closed position. In this case it is also possible that the hinge axis 6 extends at the ridge 5.

The roof structure 1 has a vent position between the closed position and the open position. Due to the relatively large surface of the ventilation window 4 a small opening of the ventilation window 4 may already provide a large flow-through area for ventilation. Therefore, the roof structure 1 is provided with a vent limiter 7, which is exposed upon transferring the ventilation window 4 from the closed position to the vent position. The vent limiter 7 comprises a number of holes which together form a ventilation opening 8. For example, the holes are punched in a plate of metal or plastic. The holes may be applied in a flexible material like rubber, such that the sealing properties thereof can be used at the same time.

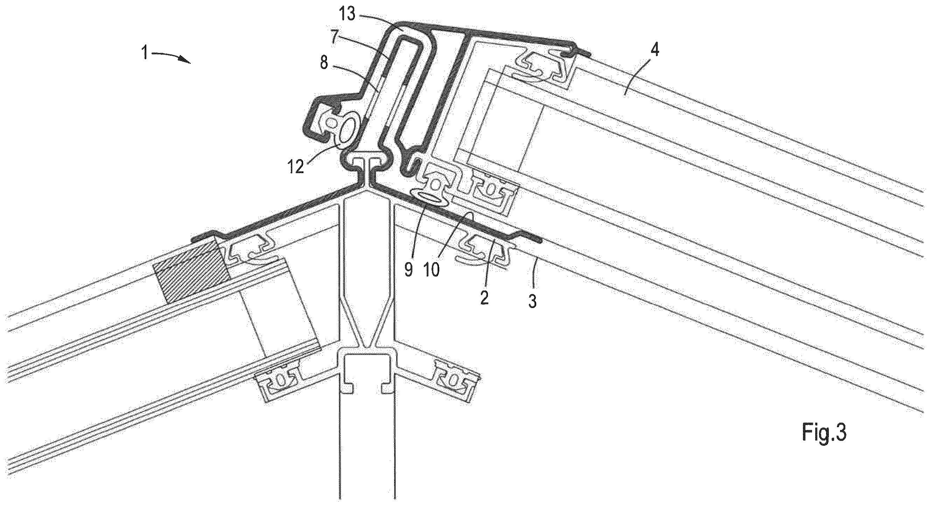

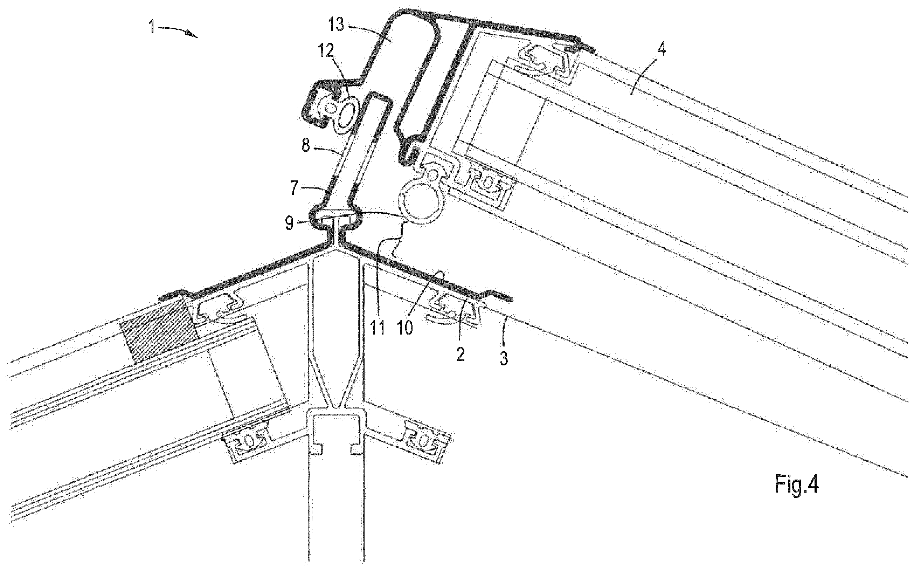

Figs. 3 and 4 show the closed position and the vent position in more detail, respectively. In the closed condition the ventilation window 4 closes off the roof opening 3 at a contact area between a window contact surface 9 of the ventilation window 4 and a roof contact surface 10 of the fixed roof 2. In the embodiment as shown the window contact surface 9 is formed by a lower side of a flexible seal of the ventilation window 4 which rests on the roof contact surface 10 in the closed position. The roof contact surface 10 comprises a part of the upper surface of a stroke of the fixed roof 2 on which the vent limiter 7 is mounted, as well.

In the vent position the ventilation window 4 is rotated with respect to the fixed roof 2 such that the window contact surface 9 and the roof contact surface 10 are separate from each other, see Fig. 4. Consequently, a window opening 11 is formed between the window contact surface 9 and the roof contact surface 10. Hence, an air channel arises via the window opening between the roof opening 3 and the ambient outside the roof structure 1. The vent limiter 7 makes sure that ventilation may be less strong than would be possible on the basis of the window opening 11, depending on the dimensions of the ventilation opening 8, or the number and size of the exposed holes in the vent limiter 7.

The ventilation opening 8 is smaller than the window opening 11. In other words, the air channel between the roof opening 3 and the ambient extends via the ventilation opening 8 and the window opening 11, but the vent capacity is determined by the ventilation opening 8.

In the embodiment according to Figs. 1-4 the roof contact surface 10 is disposed between the vent limiter 7 and the roof opening 3, but in an alternative embodiment the vent limiter 7 may be disposed between the roof contact surface 10 and the roof opening 3. The roof contact surface 10 and the window contact surface 9 may surround the roof opening 3 entirely or partly in the closed position of the ventilation window 4. It is not necessary that the vent limiter 7 also surrounds the roof opening 3. For example, it is possible that the vent limiter is only disposed at the opposite side of the hinge axis 6, such as shown in the embodiment according to Fig. 4. In that case the air channel between the roof opening 3 and the ambient is formed by a part of the roof opening 11, on the one hand, and by a part of the window opening 11, on the other hand. In practice, the side edges of the ventilation window 4 will be covered in general such that the air channel between the roof opening 3 and the ambient will substantially be determined by the exposed holes in the vent limiter 7.

Figs. 3 and 4 illustrate that the ventilation window 4 slides along the vent limiter 7 upon opening the ventilation window 4 to the vent position. The ventilation window 4 is provided with a flexible sealing element 12 in order to avoid passage of ventilation air between the vent limiter and the ventilation window 4. In the closed position as shown in Fig. 3 the ventilation window 4 closes off the roof opening 3 at the flexible sealing element 12 and at the window contact surface 9 and the roof contact surface 10. This double sealing provides a proper isolation of the greenhouse.

Furthermore, Fig. 4 shows a vent position wherein the ventilation opening 8 of the vent limiter 7 is exposed almost entirely, but a vent position in which the ventilation opening 8 is adjustable between different vent positions is possible, as well. In other words, the vent limiter 7 is adapted such that the ventilation opening 8 is adjustable between different vent positions. In the embodiment as shown the ventilation opening 8 is controlled by opening or closing the vent limiter 7 further, hence varying the position of the ventilation window 4 with respect to the fixed roof 2.

The end portion of the ventilation window 4 which extends opposite the hinge axis 6 is provided with a receiving chamber 13 in which the vent limiter 7 is received in the closed position of the ventilation window 4.

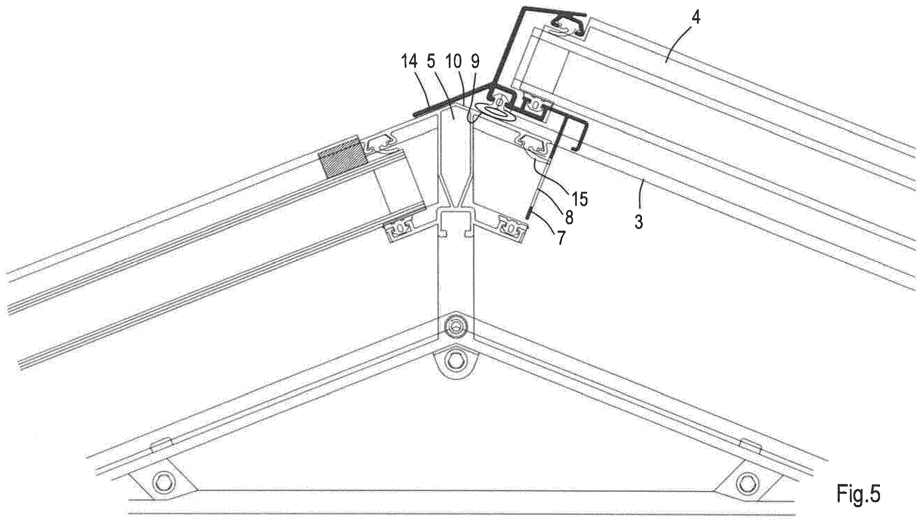

Figs. 5-7 show the closed position, the vent position and the open position, respectively, of a ventilation window 4 in an alternative embodiment of the roof structure 1. In this case the vent limiter 7 is mounted to the ventilation window 4. Upon transferring the ventilation window from the closed position to the vent position the vent limiter 7 is exposed. Also in this embodiment the vent limiter 7 comprises a number of holes that together form the vent opening 8. In Figs. 5-7 similar reference signs as in Figs. 1-4 are used for corresponding parts.

Similar to the embodiments as described above Fig. 5 shows that in the closed position the ventilation window 4 closes off the roof opening 3 at the window contact surface 9 and the roof contact surface 10. At the end portion opposite the hinge axis 6 the ventilation window 4 is provided with a sealing strip 14. The sealing strip 14 overlaps the ridge 5 in the closed position of the ventilation window 4 in order to discharge rain water such that this is not left at the contact area between the window contact surface 9 and the roof contact surface 10.

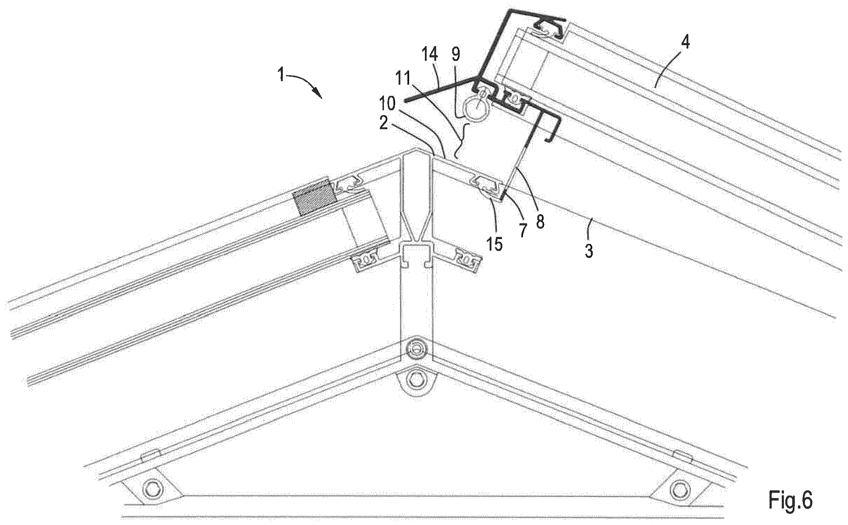

Figs. 5 and 6 illustrate that upon opening the ventilation window 4 to the vent position the vent limiter 7 slides along a flexible sealing member 15. This avoids passing ventilation air between the vent limiter 7 and the fixed roof 2. In the closed position the vent limiter 7 is received in the roof opening 3.

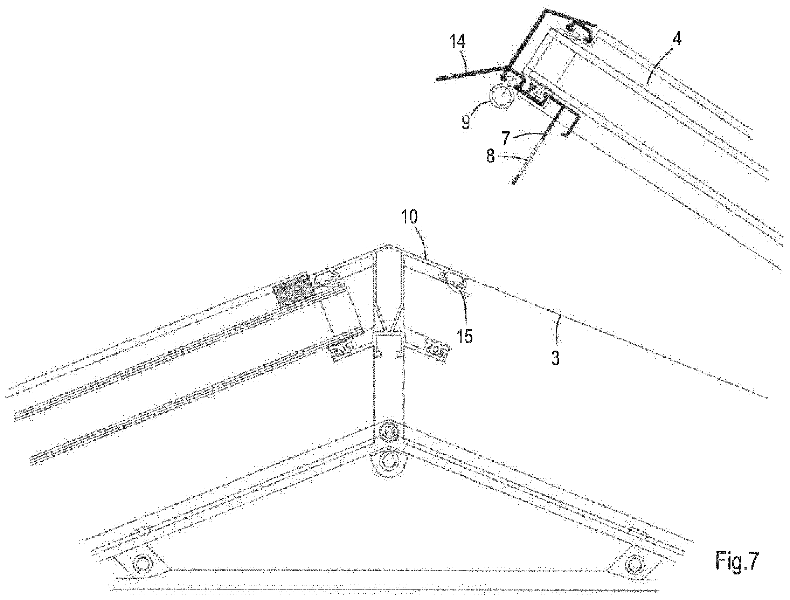

In the open position of the ventilation window 4 as shown in Fig. 7 the flow-through area of the air channel between the roof opening 3 and the ambient is substantially determined by the window opening 11 between the window contact surface 9 and the roof contact surface 10.

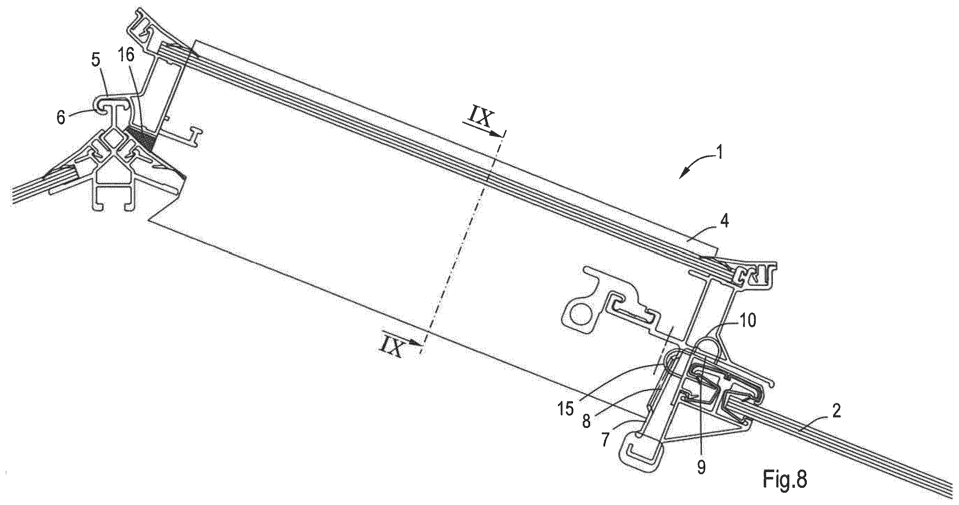

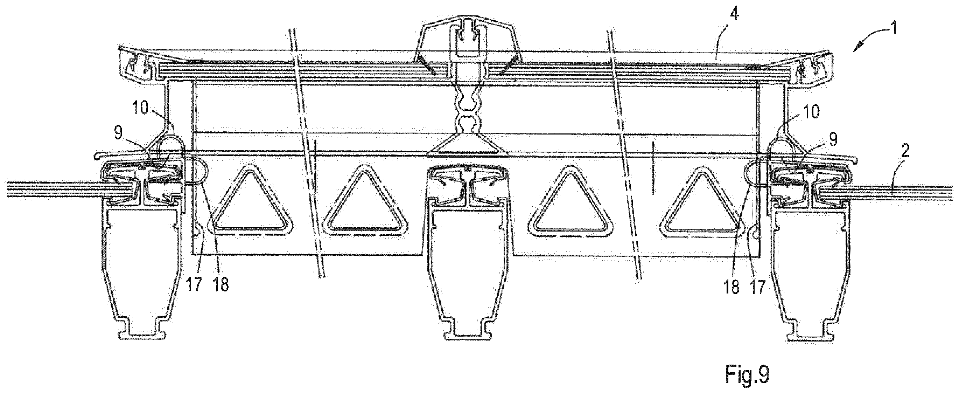

In Figs. 8 and 9 a part of an alternative embodiment of a roof structure 1 for a greenhouse is shown. In this embodiment the hinge axis 6 of the ventilation window 4 extending parallel to the ridge 5 is located at the ridge 5. As seen from the ridge 5 the ventilation window 4 extends substantially beyond the hinge axis 6 in the closed position. In Figs. 8 and 9 the same reference signs are used for corresponding parts in the embodiments as described above and shown.

Fig. 8 shows a sealing strip 16 with which the ventilation window 4 seals the roof opening 3 at the hinge axis. The sealing strip 16 can be made of a flexible material such as foam or rubber, which seals the window opening at the hinge axis 6 in the closed position as well as in the vent position.

In the closed position as shown in Fig. 8 the ventilation window 4 also closes off the roof window 3 at the window contact surface 9 and the roof contact surface 10. In this case the window contact surface 9 is located at the lower side of a strip and the roof contact surface 10 is formed by the upper side of a flexible element. In the drawing according to Fig. 8 this flexible element of the roof contact surface 10 has a curved cross section at the upper side, but in reality the flexible element is flattened by the ventilation window 4. Upon opening the ventilation window 4 to the vent position the vent limiter 7 slides along a flexible sealing member 15. Also this flexible sealing member 15 is flattened against the vent limiter 7 in reality.

Fig. 9 shows a cross-section of the embodiment according to Fig. 8. In this figure it can be seen that the roof contact surface 10 and the window contact surface 9 also extend at the side of the ventilation window 4 in transverse direction with respect to the hinge axis 6. Similar to the indication in relation to Fig. 8, in this case the window contact surface 9 is located at the lower side of a strip and the roof contact surface 10 is formed by the upper side of a flexible element, which is flattened by the ventilation window 4 in the closed position of the ventilation window 4. The side edges of the ventilation window 4 are provided with cover strips 17 which close off a channel between the roof opening 3 and the ambient in the vent position. For this reason the cover strips 17 slide along flexible side sealing members 18 upon displacing the ventilation window 4 from the closed position to the vent position. The flexible side sealing members 18 are attached to the fixed roof 2 and in contrast to which is shown in the drawing, they are flattened by the cover strips 17 in reality.

In the embodiment as shown in Figs. 8 and 9 in the vent position the air flow is determined by the vent limiter 7 at the side of the ventilation window 4 only, which side extends opposite to the hinge axis 6. At the remaining sides the window opening is closed by the sealing strip 16 at the side of the hinge axis 6 and the cover strips 17 at the opposite sides of the ventilation window 4. In fact the sealing strip 16, the cover strips 17 and the vent limiter 7 together form a common vent limiter, which is provided with a ventilation opening 8 by means of holes at the side of the ventilation window 4 opposite to the hinge axis 6. In an alternative embodiment it is possible that the cover strips 17 are also provided with holes so as to additionally form the ventilation opening 8 of the common vent limiter.

The invention is not limited to the embodiments as shown in the drawings and described above. The invention can be varied in different manners within the scope of the claims.

## Claims

1. A roof structure (1) for a greenhouse, comprising a fixed roof (2) including a roof opening (3) and a ventilation window (4) which is movable with respect to the fixed roof (2) between a closed position in which the ventilation window (4) closes off the roof opening (3), and a vent position in which a window opening (11) is present such that an air channel is formed between the roof opening (3) and the ambient,
wherein the roof structure (1) is provided with a vent limiter (7) having a ventilation opening (8) which is smaller than the window opening (11), wherein the air channel extends through the ventilation opening (8), **characterized in that** the vent limiter (7) is mounted to the ventilation window (4) and slidable along an edge of the roof opening (3) or **in that** the vent limiter (7) is mounted to the fixed roof (2) and the ventilation window is slidable along the vent limiter (7).

2. A roof structure (1) according to claim 1, wherein in the vent position the ventilation opening (8) is at least 40% smaller than the window opening (11), or wherein the ventilation opening (8) is adjustable within a range of 0-100% of the window opening (11).

3. A roof structure (1) according to claim 1 or 2, wherein in the vent position the vent limiter (7) is between the window opening (11) and the roof opening (3), or wherein in the vent position the window opening (11) is between the vent limiter (7) and the roof opening (3).

4. A roof structure (1) according to one of the preceding claims, wherein the vent limiter (7) is adapted such that upon transferring the ventilation window (4) from the closed position to the vent position the vent limiter (7) is exposed.

5. A roof structure (1) according to one of the preceding claims, wherein the ventilation window (4) is rotatably mounted to the fixed roof and rotatable about a hinge axis (6), wherein the vent limiter (7) is disposed at least at the opposite side of the hinge axis (6).

6. A roof structure (1) according to claim 5, wherein the roof structure (1) extends obliquely and comprises a ridge (5) and wherein preferably the ventilation window (4) extends substantially between the ridge (5) and the hinge axis (6).

7. A roof structure (1) according to one of the preceding claims, wherein the vent position of the ventilation window (4) is an intermediate position between the closed position and an open position.

8. A roof structure (1) according to one of the preceding claims, wherein the vent limiter (7) comprises a stiff plate in which the ventilation opening (8) is present, or wherein the vent limiter is made of a flexible material like rubber or flexible plastic in which the ventilation opening is present.

9. A roof structure (1) according to one of the preceding claims, wherein in the closed position the ventilation window (4) closes off the roof opening (3) at a contact area between a window contact surface (9) of the ventilation window (4) and a roof contact surface (10) of the fixed roof (2), and wherein in the vent condition the window opening is located between the window contact surface (9) and the roof contact surface (10).

10. A greenhouse including a roof structure (1) according to one of the preceding claims.

## Patentansprüche

1. Dachstruktur (1) für ein Gewächshaus, mit einem festen Dach (2) mit einer Dachöffnung (3) und einem Lüftungsfenster (4), das bezüglich des festen Dachs (2) beweglich ist zwischen einer geschlossenen Position, in der das Lüftungsfenster (4) die Dachöffnung (3) verschließt, und einer Lüftungsposition, in der eine Fensteröffnung (11) vorhanden ist, derart, dass ein Luftkanal zwischen der Dachöffnung (3) und der Umgebung gebildet wird,
wobei die Dachstruktur (1) eine Lüftungsbegrenzungseinrichtung (7) mit einer Lüftungsöffnung (8) aufweist, die kleiner ist als die Fensteröffnung (11), wobei sich der Luftkanal durch die Lüftungsöffnung (8) erstreckt;
**dadurch gekennzeichnet, dass**
die Lüftungsbegrenzungseinrichtung (7) am Lüftungsfenster (4) montiert und entlang eines Rands der Dachöffnung (3) verschiebbar ist; oder
dadurch, dass die Lüftungsbegrenzungseinrichtung (7) am festen Dach (2) montiert und das Lüftungsfenster entlang der Lüftungsbegrenzungseinrichtung (7) verschiebbar ist.

2. Dachstruktur (1) nach Anspruch 1, wobei die Lüftungsöffnung (8) in der Lüftungsposition mindestens 40% kleiner ist als die Fensteröffnung (11), oder wobei die Lüftungsöffnung (8) in einem Bereich von 0 -100% der Fensteröffnung (11) einstellbar ist.

3. Dachstruktur (1) nach Anspruch 1 oder 2, wobei sich die Lüftungsbegrenzungseinrichtung (7) in der Lüftungsposition zwischen der Fensteröffnung (11) und der Dachöffnung (3) befindet, oder wobei die Fensteröffnung (11) sich in der Lüftungsposition zwischen der Lüftungsbegrenzungseinrichtung (7) und der Dachöffnung (3) befindet.

4. Dachstruktur (1) nach einem der vorangehenden Ansprüche, wobei die Lüftungsbegrenzungseinrichtung (7) derart konfiguriert ist, dass beim Übergang des Lüftungsfensters (4) von der geschlossenen Position zur Lüftungsposition die Lüftungsbegrenzungseinrichtung (7) freigelegt wird.

5. Dachstruktur (1) nach einem der vorangehenden Ansprüche, wobei das Lüftungsfenster (4) am festen Dach drehbar montiert und um eine Scharnierachse (6) drehbar ist, wobei die Lüftungsbegrenzungseinrichtung (7) mindestens an der gegenüberliegenden Seite der Scharnierachse (6) angeordnet ist.

6. Dachstruktur (1) nach Anspruch 5, wobei sich die Dachstruktur (1) schräg erstreckt und einen Steg (5) aufweist, und wobei sich das Lüftungsfenster (4) vorzugsweise im Wesentlichen zwischen dem Steg (5) und der Scharnierachse (6) erstreckt.

7. Dachstruktur (1) nach einem der vorangehenden Ansprüche, wobei die Lüftungsposition des Lüftungsfensters (4) eine Zwischenposition zwischen der geschlossenen Position und einer offenen Position ist.

8. Dachstruktur (1) nach einem der vorangehenden Ansprüche, wobei die Lüftungsbegrenzungseinrichtung (7) eine starre Platte aufweist, in der die Lüftungsöffnung (8) ausgebildet ist, oder wobei die Lüftungsbegrenzungseinrichtung aus einem flexiblen Material wie Gummi oder flexiblem Kunststoff besteht, in dem die Lüftungsöffnung ausgebildet ist.

9. Dachstruktur (1) nach einem der vorangehenden Ansprüche, wobei das Lüftungsfenster (4) in der geschlossenen Position die Dachöffnung (3) an einer Kontaktfläche zwischen einer Fensterkontaktfläche (9) des Lüftungsfensters (4) und einer Dachkontaktfläche (10) des festen Dachs (2) abschließt, und wobei die Fensteröffnung im Lüftungszustand zwischen der Fensterkontaktfläche (9) und der Dachkontaktfläche (10) angeordnet ist.

10. Gewächshaus mit einer Dachstruktur (1) nach einem der vorangehenden Ansprüche.

## Revendications

1. Structure de toit (1) pour une serre, comprenant un toit fixe (2) comportant une ouverture de toit (3) et une fenêtre de ventilation (4) qui est mobile par rapport au toit fixe (2) entre une position fermée dans laquelle la fenêtre de ventilation (4) ferme l'ouverture de toit (3), et une position d'aération dans laquelle une ouverture de fenêtre (11) est présente de sorte qu'un canal d'air soit formé entre l'ouverture de toit (3) et l'air ambiant,
dans laquelle la structure de toit (1) est pourvue d'un limiteur d'aération (7) ayant une ouverture de ventilation (8) qui est plus petite que l'ouverture de fenêtre (11), dans laquelle le canal d'air s'étend à travers l'ouverture de ventilation (8), **caractérisée en ce que** le limiteur d'aération (7) est monté sur la fenêtre de ventilation (4) et est coulissant le long d'un bord de l'ouverture de toit (3) ou **en ce que** le limiteur d'aération (7) est monté sur le toit fixe (2) et la fenêtre de ventilation est coulissante le long du limiteur d'aération (7).

2. Structure de toit (1) selon la revendication 1, dans laquelle dans la position d'aération l'ouverture de ventilation (8) est plus petite d'au moins 40 % que l'ouverture de fenêtre (11), ou dans laquelle l'ouverture de ventilation (8) est réglable dans une plage de 0 à 100 % de l'ouverture de fenêtre (11).

3. Structure de toit (1) selon la revendication 1 ou 2, dans laquelle dans la position d'aération le limiteur d'aération (7) est entre l'ouverture de fenêtre (11) et l'ouverture de toit (3), ou dans laquelle dans la position d'aération l'ouverture de fenêtre (11) est entre le limiteur d'aération (7) et l'ouverture de toit (3).

4. Structure de toit (1) selon l'une des revendications précédentes, dans laquelle le limiteur d'aération (7) est adapté de sorte que lors du transfert de la fenêtre de ventilation (4) de la position fermée à la position d'aération, le limiteur d'aération (7) soit exposé.

5. Structure de toit (1) selon l'une des revendications précédentes, dans laquelle la fenêtre de ventilation (4) est montée rotative sur le toit fixe et peut tourner autour d'un axe d'articulation (6), dans laquelle le limiteur d'aération (7) est disposé au moins du côté opposé de l'axe d'articulation (6).

6. Structure de toit (1) selon la revendication 5, dans laquelle la structure de toit (1) s'étend à l'oblique et comprend un faîte (5) et dans laquelle de préférence la fenêtre de ventilation (4) s'étend sensiblement entre le faîte (5) et l'axe d'articulation (6).

7. Structure de toit (1) selon l'une des revendications précédentes, dans laquelle la position d'aération de la fenêtre de ventilation (4) est une position intermédiaire entre la position fermée et une position ouverte.

8. Structure de toit (1) selon l'une des revendications précédentes, dans laquelle le limiteur d'aération (7) comprend une plaque rigide dans laquelle est présente l'ouverture de ventilation (8), ou dans laquelle le limiteur d'aération est réalisé en un matériau flexible tel que le caoutchouc ou un plastique flexible dans lequel l'ouverture de ventilation est présente.

9. Structure de toit (1) selon l'une des revendications précédentes, dans laquelle dans la position fermée la fenêtre de ventilation (4) ferme l'ouverture de toit (3) au niveau d'une zone de contact entre une surface de contact de fenêtre (9) de la fenêtre de ventilation (4) et une surface de contact de toit (10) du toit fixe (2), et dans laquelle dans la condition d'aération, l'ouverture de fenêtre est située entre la surface de contact de fenêtre (9) et la surface de contact de toit (10).

10. Serre comportant une structure de toit (1) selon l'une des revendications précédentes.
